(19) Europäisches Patentamt
European Patent Office
Office européen des brevets

(11) **EP 1 794 572 B1**

(12) **EUROPÄISCHE PATENTSCHRIFT**

(45) Veröffentlichungstag und Bekanntmachung des Hinweises auf die Patenterteilung:
**09.02.2011 Patentblatt 2011/06**

(21) Anmeldenummer: **05776031.6**

(22) Anmeldetag: **18.07.2005**

(51) Int Cl.:
*G01N 21/45* (2006.01)    *G01N 21/95* (2006.01)
*G01N 21/88* (2006.01)    *G01B 9/02* (2006.01)
*G01B 11/24* (2006.01)

(86) Internationale Anmeldenummer:
**PCT/EP2005/053445**

(87) Internationale Veröffentlichungsnummer:
**WO 2006/032553 (30.03.2006 Gazette 2006/13)**

(54) **VERFAHREN ZUM BETRIEB EINES INTERFEROMETRISCHEN SYSTEMS MIT EINEM REFERENZELEMENT MIT EINER ODER MEHREREN VERSPIEGELTEN ZONEN**

METHOD OF OPERATING AN INTERFEROMETRIC SYSTEM WITH A REFERENCE ELEMENT WITH ONE OR MULTIPLE MIRRORED ZONES

PROCEDE D'EXPLOITATION D'UN SYSTEME INTERFEROMETRIQUE AVEC UN ELEMENT DE REFERENCE POURVU D'UNE OU PLUSIEURS ZONES REFLECHISSANTES

(84) Benannte Vertragsstaaten:
**CZ DE IT**

(30) Priorität: **22.09.2004 DE 102004045802**

(43) Veröffentlichungstag der Anmeldung:
**13.06.2007 Patentblatt 2007/24**

(73) Patentinhaber: **ROBERT BOSCH GMBH**
**70442 Stuttgart (DE)**

(72) Erfinder:
• STRÄHLE, Jochen
  71287 Weissach (DE)
• KALLMANN, Ulrich
  72076 Tuebingen (DE)
• GENCOGLU, Rahmi
  16130 Nilüfer/Bursa (TR)
• KASTEN, Uwe
  71696 Moeglingen (DE)

(56) Entgegenhaltungen:
DE-C1- 19 721 843    GB-A- 673 971
US-B1- 6 268 921    US-B1- 6 721 094

• PATENT ABSTRACTS OF JAPAN Bd. 013, Nr. 073 (P-830), 20. Februar 1989 (1989-02-20) & JP 63 259404 A (TOSHIBA CORP), 26. Oktober 1988 (1988-10-26)

EP 1 794 572 B1

**Beschreibung**

Stand der Technik

Die Erfindung betrifft ein Verfahren zum Betrieb eines interferometrischen Systems mit einem eine Lichtquelle und eine Beleuchtungsoptik aufweisenden Beleuchtungsarm zum Bilden eines Beleuchtungsstrahlengängs, einem ein zweites Referenzelement zur Vermessung eines Objektes mit einer zu vermessenden Objektfläche aufweisenden Objektarm zum Bilden eines Abbildungsstrahlengangs, wobei das zu vermessenden Objekt eine der direkten Beleuchtung nicht zugänglichen Objektfläche aufweist, einem Referenzarm mit einem ersten Referenzelement und einem Detektorarm mit einem Detektor und einem Strahlteiler.

Die Fertigung von Präzisionsteilen erfordert zur Sicherung der Qualität der entsprechenden Teile Meßmethoden zur Erfassung der Geometrie und der Beschaffenheit der Teile. Optische Meßmethoden, wie beispielsweise die Bilderfassung und Bildauswertung, die Interferometrie, insbesondere die Weißlichtinterferometrie leistet hier einen wichtigen Beitrag.

Das Prinzip des Weißlichtinterferometers beruht darauf, dass eine kurzkohärente Lichtquelle für die Beleuchtung eines abbildenden Systems benutzt wird. Das abbildende System besitzt zusätzlich zur normalen Abbildungsoptik einen Referenzarm, welcher von einem Teil des eingestrahlten Lichts durchlaufen wird. Besitzen nun der Laufweg des Lichtes $\Lambda_o$ im Objektarm und der Laufweg im Referenzarm $\Lambda_R$ einen Wegunterschied, der geringer ist als die Kohärenzlänge $l_c$ des Lichts, d.h.

$$| \Lambda_R - \Lambda_o | < l_C \qquad\qquad (1)$$

so können die wieder zusammengeführten Lichtfelder eine messbare Interferenz aufweisen. Dies wird ausgenutzt, indem während der Messung der Wegunterschied der Lichtfelder definiert durch Verschiebung des Objektes oder des Referenzelementes entlang der optischen Achse verändert wird. Gleichzeitig wird die Intensität der wieder zusammengeführten Lichtfelder auf einem flächenhaft messenden Detektor, üblicherweise einer CCD-Kamera, gemessen. Da eine konstruktive oder destruktive Interferenz nur innerhalb der Kohärenzlänge der Weißlichtquelle erfolgen kann, liefert die pixelweise Auswertung der durch die Interferenz erzeugten Intensitätsmodulation, das Intensitätskorrelogramm, eine eindeutige Höheninformation für jedes einzelne Pixel. Dies führt, für das gesamte Pixelfeld ausgeführt, zu einer vollständigen Höheninformation des Objektes.

Kommerzielle Weißlichtinterferometer weisen typisch folgende Spezifikationen auf:

Die Höhenauflösung $\Lambda z$ ist durch die verwendete mittlere Wellenlänge des Lichtes $\lambda_m$, die Kohärenzlänge $l_c$ und die Art des Korrelogrammauswertungsalgorithmus gegeben. Typische Parameter wie $\lambda_m$ = 600 nm, $l_c$ = 2 $\mu$m ermöglichen Werte von $\Delta z$ = 1 nm.

Die laterale Auflösung ö gleicht der eines konventionellen abbildenden Systems und ist prinzipiell beschränkt durch $\lambda_m$ und die Numerische Apertur NA der Abbildungsoptik.

$$\delta \geq 0{,}61\ \lambda_m\ /\ NA \qquad\qquad (2)$$

Der maximale messbare Gesamthöhenunterschied $z_{max}$ bestimmt sich aus der technischen Machbarkeit, einen Wegunterschied in Referenzarm und Objektarm zu erzeugen, der über die gesamte Strecke präzise geführt wird. Geregelte Piezosysteme ermöglichen heute Werte von $z_{max} \leq 400\ \mu$m.

Konventionelle Interferometer, insbesondere Weißlichtinterferometer-Systeme können dann für die oben beschriebenen Aufgaben benutzt werden, wenn die zu vermessende Stelle leicht zugänglich ist und eine vorwiegend ebene Geometrie aufweist. Ist dies nicht der Fall, kommen Interferometer zum Einsatz, die eine auf das zu vermessende Objekt angepasste Sonderoptik haben. Nachteilig bei diesen Interferometern ist jedoch, dass Hinterschneidungen am Messobjekt im Schattenbereich der Beleuchtung liegen und somit nicht erfasst werden können. Zur Vermessung dieser Flächen muss das Objekt demontiert und in einem zweiten Messvorgang erfasst werden.

Die DE 19721843 C1 zeigt ein Interferometer, bei welchem in einem Teilstrahlengang eine Messsonde angeordnet ist. Dabei ist in der Messsonde ein Doppelstrahlteiler vorgesehen, der eine erste und eine zweite Teilungsebene aufweist. Die erste Teilungsebene bewirkt eine erste Teilung des Teilstrahles in einen weiteren Teilstrahl, der in Form eines Messteilstrahls die der direkten Beleuchtung nicht zugängliche Messstelle beleuchtet. Ein Teil des durch die erste Teilungsebene ohne Ablenkung durchlaufenden zweiten weiteren Teilstrahles wird an der zweiten Teilungsebene zur Beleuchtung der ebenfalls der direkten Beleuchtung nicht zugänglichen Messstelle abgelenkt. Der andere Teil des Teilstrahles durchläuft ohne Ablenkung die Teilungsebene und trifft als Teilstrahl auf einen Referenzspiegel auf. Alle an den Objektflächen bzw. der Spiegelfläche rückreflektierten Teilstrahlen werden über einen ersten Strahlungsteiler mit gebildeten Referenzstrahlen zusammengeführt. Die Referenzstrahlen werden dabei außerhalb der Messsonde über zwei akustooptische Deflektoren gebildet. Demnach zeigen die Detektoren Interferenzen an, die sich durch Überlagerung dieser Referenzstrahlen mit einem der 3 Teilstrahlen bei gleicher optischer Weglänge ergeben.

Die GB-A-673 971 sieht im Objektarm ein Element vor, welches verspiegelte Zonen zur Reflexion des auftreffenden Lichts aufweist. Diese von einem Objekt reflektierten Lichtstrahlen werden mit durch Reflexion an einer Referenzebene gebildeten Referenzstrahlen zur Interferenz gebracht. Dieses Element stellt aber ein Element zur optimalen Ausleuchtung von Objektflächen, die der direkten Beleuchtung nicht zugänglich sind, dar.

Es ist Aufgabe der Erfindung, ein Verfahren zum Betrieb eines interferometrischen Systems zur Verfügung zu stellen, das eine 3-dimensionale Vermessung von Objekten mit schwer zugänglichen Flächen erlaubt.

Vorteile der Erfindung

Die das Verfahren betreffende Aufgabe der Erfindung wird durch die Merkmale des Anspruchs 1 gelöst. Das zweite Referenzelement weist eine oder mehrere verspiegelte Zonen auf. Hierdurch wird erreicht, dass Lichtstrahlen hinterschnittene Flächen erreichen, die somit im selben

Messvorgang wie die übrigen Flächen vermessen werden können. Insbesondere kann die Lage der hinterschnittenen Flächen relativ zu den übrigen Flächen bestimmt werden.

Hinterschnitte jeder Form, auch solche mit nicht ebenen Flächen können vermessen werden, indem die verspiegelte Zone an das Objekt dahingehend angepasst ist, dass die verspiegelte Zone im jeweils halben Winkel zur Senkrechten zur optischen Achse des Abbildungsstrahlenganges wie eine zu vermessende Teilfläche der Objektfläche ausgebildet ist.

Eine gegenüber Umwelteinflüssen wie Temperatureinflüssen besonders unempfindliche Ausführungsform sieht vor, dass die verspiegelte Zone einstückig mit dem Referenzelement verbunden ist.

Wird die verspiegelte Zone als getrennte Einheit ausgeführt und ist sie mit dem Referenzelement beispielsweise durch kleben oder schrauben mechanisch verbunden, kann sie in einem getrennten Bearbeitungsschritt auf die Form der Objektfläche angepasst und gegebenenfalls bei einem gleichartigen Objekt in einem anderen Referenzelement wiederverwendet werden.

Erfindungsgemäß ist im zweiten Referenzelement neben der verspiegelten Zone eine zweite direkt beleuchtete Referenzfläche zur Vermessung der Objektfläche ausgebildet. Hierdurch wird erreicht, dass die relative Lage einer dem üblichen Messverfahren zugänglichen Objektfläche und der üblicherweise nicht zugänglichen Fläche bestimmt werden kann.

Erfindungsgemäß ist im zweiten Referenzelement neben der verspiegelten Zone mindestens eine dritte direkt beleuchtete Referenzfläche zur Vermessung mindestens einer zweiten Objektfläche ausgebildet, sodass in einem Tiefenscan die Lage sämtlicher interessierender Objektflächen in Bezug auf das Referenzelement in einem Tiefenscan bestimmt werden können.

Die das Verfahren betreffende Aufgabe der Erfindung wird durch die Merkmale des Anspruchs 1 gelöst.

Zeichnungen

Die Erfindung wird im folgenden anhand eines in den Figuren dargestellten Ausführungsbeispiels näher erläutert. Es zeigen:

Figur 1 schematisch eine Weißlichtinterferometer-Anordnung gemäß dem Stand der Technik;
Figur 2 schematisch ein interferometrisches System gemäß dem Stand der Technik;
Figur 3 schematisch ein interferometrisches System, das gleichzeitigen Messung dem Objektiv zugewandter und abgewandter Flächen geeignet ist.

Beschreibung der Ausführungsbeispiele

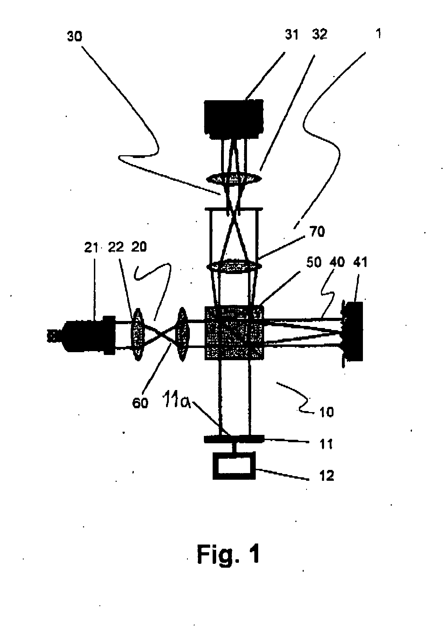

Das interferometrische System 1 einer in Fig. 1 schematisch gezeigten Weißlichtinterferometer-Anordnung gemäß dem Stand der Technik umfasst einen Objektarm 40, in dem sich die zu messende Oberfläche eines Objektes 41 befindet, einen Beleuchtungsarm 20, der eine Lichtquelle 21 und eine aus einer oder mehreren Linsen aufgebauten Beleuchtungsoptik 22 aufweist, die einen Beleuchtungsstrahlengang 60 ausbilden. Orthogonal zum Beleuchtungsarm 20 und zum Objektarm 40 angeordnet weist das interferometrische System 1 einen Referenzarm 10 mit einem ersten Referenzelement 11 auf, das mechanisch mit einem Verstellelement 12, üblicherweise einem Piezosystem, gekoppelt ist. Gegenüberliegend zum Referenzarm 10 befindet sich ein Detektorarm 30, der einen Detektor 31, üblicherweise einen flächenhaft messenden Detektor 31, wie beispielsweise eine CCD-Kamera, sowie eine Linse 32 zur Abbildung einer auszuwertenden Intensitätsverteilung im Abbildungsstrahlengang 70 aufweist. Für die Auswertung ist eine (nicht näher gezeigte) Auswerteeinrichtung vorhanden.

Ein Strahlteiler 50 teilt dabei die verschiedenen Lichtstrahlen auf bzw. führt sie wieder zusammen, so dass die Lichtstrahlen aus dem Referenzarm 10 und die aus dem Objektarm 40 im Detektorarm 30 am Detektor 31 in der oben beschriebenen Weise interferieren können.

Die Abtastung des Objektes kann dabei durch Verschiebung des Referenzelementes 11 mit dem Verstellelement 12 oder alternativ durch Verschiebung des Objektes 41 mit einem gleichartigen Verstellelement erfolgen.

Die Architektur eines interferometrischen Systems 1 gemäß dem Stand der Technik erlaubt nur die Vermessung von Flächen am Objekt 41, die der Beleuchtung direkt zugänglich sind. Hinterschnitte im Objekt 41 erfordern, dass das Objekt demontiert wird und in einem zweiten Vorgang diese Flächen sowie weitere Objektflächen vermessen werden um die Lage der Hinterschnitte zu den im ersten Schnitt vermessenen Objektflächen zu bestimmen.

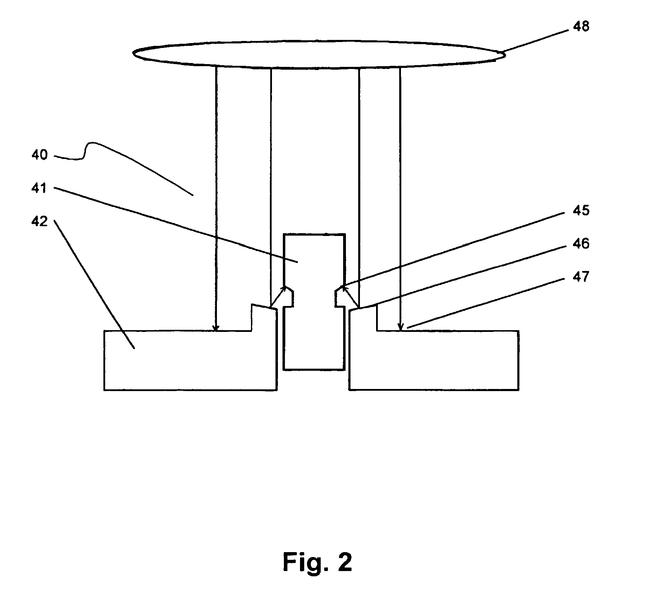

Dem gegenüber zeigt Fig. 2 schematisch ein interferometrisches System 1, bei dem Objektflächen 45 am Objekt 41 vermessen werden, die der direkten Beleuchtung nicht zugänglich sind. Das Objekt 41 ist hierzu mit einem zweiten Referenzelement 42 verbunden, das mindestens eine verspiegelte Zone 46 aufweist.

Durch eine Linse 48 tritt das Licht aus dem hier nicht dargestellten Beleuchtungsarm 20 in Richtung des Objektes 41 aus. Der die verspiegelte Zone 46 treffende Anteil wird in Richtung der der direkten Beleuchtung nicht zugänglichen Objektfläche 45 reflektiert. Von dort rückreflektiert und über die verspiegelte Zone 46 tritt er durch die Linse 48 und wird über den hier nicht dargestellten Strahlteiler 50 dem ebenfalls nicht dargestellten Detektor 31 zugeführt. Als Referenz für die Objektfläche 45 dient eine direkt beleuchtete Referenzfläche 47, deren reflektiertes Licht die selbe optische Weglänge durchläuft wie das von der Objektfläche 45 reflektierte und somit die selben Interferenzmuster erzeugt.

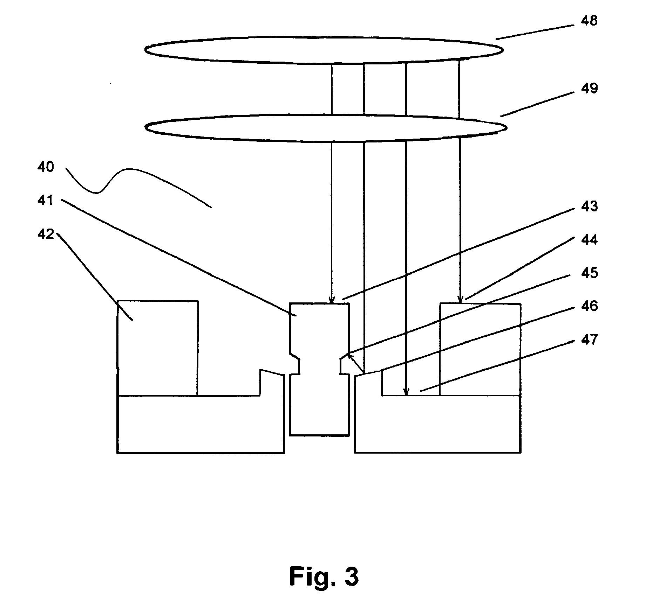

Fig. 3 zeigt eine Ausführungsform für das interferometrische System 1, die eine Vermessung eines kompletten Objektes 41 mit Hinterschnitten ermöglicht. Im Objektarm 40 wird hierzu die Linse 48 in mindestens eine zweite Position in Bezug auf das Objekt 41 gebracht, hier durch die Linse 49 dargestellt. Dies bewirkt einen Tiefenscan über das Objekt 41. Während in der Position der Linse 48 die Objektfläche 43 und die zugehörige dritte direkt beleuchtete Referenzfläche 44 zur Interferenz beitragen, werden in der Position der Linse 49 die Objektfläche 45 mittels der verspiegelten Zone 46 und die zugehörige zweite direkt beleuchtete Referenzfläche 47 vermessen. Auf diese Weise können sämtliche interessierenden Flächen des Objektes 41 relativ zueinender vermessen werden. Bei entsprechender Ausgestaltung des zweiten Referenzelementes 42 mit verspiegelten Zonen 46 sind somit alle interessierenden Flächen des Objektes erreichbar.

## Patentansprüche

1. Verfahren zum Betrieb eines interferometrisches Systems (1) zur Vermessung eines Objektes (41) mit einem Beleuchtungsarm (20) zum Bilden eines Beleuchtungsstrahlengangs (60), einem Referenzarm (10), einem Objektarm (40) zum Bilden eines Abbildungsstrahlengangs (70) und einem Detektorarm (30), wobei der Beleuchtungsarm (20) eine Lichtquelle (21) und eine Beleuchtungsoptik (22) aufweist, der Referenzarm (10) ein erstes Referenzelement (11) mit einer ersten Referenzfläche (11a) aufweist und der Detektorarm (30) einen Detektor (31) und einen Strahlteiler (50) aufweist, wobei das zu vermessende Objekt (41) eine der direkten Beleuchtung nicht zugänglichen Objektfläche (45) aufweist, wobei

   von der der direkten Beleuchtung nicht zugänglichen Objektfläche (45) reflektierte Lichtstrahlen zusätzlich über eine oder mehrere verspiegelte Zonen (46) reflektiert und dann mit von einer zugehörigen zweiten direkt beleuchteten Referenzfläche (47) reflektierten Lichtstrahlen zur Interferenz gebracht werden, während von einer weiteren Objektfläche (43) reflektierte Lichtstrahlen mit von einer zugehörigen dritten direkt beleuchteten Referenzfiäche (44) reflektierten Lichtstrahlen zur Interferenz gebracht werden, wobei die zweite Referenzfläche (47) und die dritte Referenzfläche (44) in einem im Objektarm (40) angeordneten zweiten Referenzelement (42) vorgesehen sind, wobei in einer ersten Position (48) der Beleuchtungsoptik in Bezug auf das Objekt (41) die Objektfläche (43) und die dritte Referenzfläche (44) zur Interferenz beitragen, **dadurch gekennzeichnet, dass** in einer zweiten, von der ersten Position (48) verschiedenen Position (49) der Beleuchtungsoptik (22) in Bezug auf das Objekt (41) die Objektfläche (45) und die zweite Referenzfläche (47) zur Interferenz beitragen.

2. Verfahren nach dem Anspruch 1,
   **dadurch gekennzeichnet, dass** als interferometrisches System (1) ein Weißlichtinterferometer benutzt wird.

**Claims**

1. Method for operating an interferometric system (1) for measuring an object (41), having an illumination arm (20) for forming an illumination beam path (60), a reference arm (10), an object arm (40) for forming an imaging beam path (70) and a detector arm (30), the illumination arm (20) having a light source (21) and an illumination optics (22), the reference arm (10) having a first reference element (11) with a first reference surface (11a), and the detector arm (30) having a detector (31) and a beam splitter (50), the object (41) to be measured having an object surface (45) not accessible to the direct illumination, the light beams reflected by the object surface (45) not accessible to the direct illumination additionally being reflected via one or multiple mirrored zones (46), and again caused to interfere with light beams reflected by an associated second, directly illuminated reference surface (47), while light beams reflected by a further object surface (43) being caused to interfere with light beams reflected by an associated third, directly illuminated reference surface (44), the second reference surface (47) and the third reference surface (44) being provided in a second reference element (42) arranged in the object arm (40), the object surface (43) and the third reference surface (44) contributing to the interference in a first position (48) of the illumination optics with reference to an object (41), **characterized in that** the object surface (45) and the second reference surface (47) contribute to the interference in a second position (49), differing from the first position (48), of the illumination optics (22) with respect to the object (41).

2. Method according to Claim 1, **characterized in that** a white light interferometer is used as interferometric system (1).

**Revendications**

1. Procédé d'utilisation d'un système interférométrique (1) pour la mesure d'un objet (41),
le système présentant une branche d'éclairage (20) qui forme un parcours (60) de rayon d'éclairage, une branche de référence (10), une branche d'objet (40) qui forme un parcours (70) de rayon de formation d'image et une branche de détection (30),
la branche d'éclairage (20) présentant une source de lumière (21) et une optique d'éclairage (22),
la branche de référence (10) présentant un premier élément de référence (11) doté d'une première surface de référence (11a) et la branche de détection (30) présentant un détecteur (31) et un diviseur de faisceau (50),
l'objet (41) à mesurer présentant une surface (45) qui n'est pas accessible à un éclairage direct,
les rayons lumineux réfléchis par la surface (45) non accessible à l'éclairage direct étant de plus réfléchis par une ou plusieurs zones réfléchissantes (46) et étant ensuite amenés à interférence avec des rayons lumineux réfléchis par une deuxième surface de référence (47) associée et éclairée directement,
les rayons lumineux réfléchis par une autre surface d'objet (43) étant amenés à interférence avec des faisceaux lumineux réfléchis par une troisième surface de référence (44) associée et éclairée directement,
la deuxième surface de référence (47) et la troisième surface de référence (44) étant prévues dans un deuxième élément de référence (42) disposé dans la branche d'objet (40),
la surface d'objet (43) et la troisième surface de référence (44) contribuant à l'interférence lorsque l'optique d'éclairage est située dans une première position (48) par rapport à l'objet (41),
**caractérisé en ce que**
la surface d'objet (45) et la deuxième surface de référence (47) contribuent à l'interférence lorsque l'optique d'éclairage (22) se trouve dans une deuxième position (49), différente de la première position (48), par rapport à l'objet (41).

2. Procédé selon la revendication 1, **caractérisé en ce qu'**il utilise comme système interférométrique (1) un interféromètre à lumière blanche.

**Fig. 1**

**Fig. 2**

**Fig. 3**

**IN DER BESCHREIBUNG AUFGEFÜHRTE DOKUMENTE**

**In der Beschreibung aufgeführte Patentdokumente**

- DE 19721843 C1

- GB 673971 A